(19)

**Europäisches Patentamt**
**European Patent Office**
**Office européen des brevets**

(11) **EP 1 341 260 B1**

(12) **EUROPÄISCHE PATENTSCHRIFT**

(45) Veröffentlichungstag und Bekanntmachung des Hinweises auf die Patenterteilung:
**16.11.2011 Patentblatt 2011/46**

(51) Int Cl.:
*H01Q 21/24* (2006.01)     *H04B 7/08* (2006.01)
*H01Q 21/26* (2006.01)

(21) Anmeldenummer: **03001677.8**

(22) Anmeldetag: **25.01.2003**

(54) **Empfangsantennen-Anordnung für Satelliten- und/oder terrestrische Funksignale auf Fahrzeugen**

Antenna for receiving satellite and/or terrestrial radio signals in cars

Dispositif d'antennes servant à la réception des signaux satellites et/ou terrestres sur un véhicule

(84) Benannte Vertragsstaaten:
**AT BE BG CH CY CZ DE DK EE ES FI FR GB GR HU IE IT LI LU MC NL PT SE SI SK TR**

(30) Priorität: **01.03.2002 DE 10209060**

(43) Veröffentlichungstag der Anmeldung:
**03.09.2003 Patentblatt 2003/36**

(73) Patentinhaber: **Delphi Delco Electronics Europe GmbH**
**42119 Wuppertal (DE)**

(72) Erfinder: **Lindenmeier, Heinz**
**82152 Planegg (DE)**

(74) Vertreter: **Denton, Michael John**
**Delphi France SAS**
**64 Avenue de la Plaine de France**
**ZAC Paris Nord II**
**B.P. 65059, Tremblay en France**
**95972 Roissy Charles de Gaulle Cedex (FR)**

(56) Entgegenhaltungen:
**EP-A- 1 239 608**    **WO-A-01/80366**
**WO-A-90/07802**    **US-A- 5 592 182**
**US-A- 5 784 032**

• **LINDENMEIER H K ET AL: "An Integrated Circuit Processor For A Multiple Scanning Antenna Diversity System For Mobile FM Reception", PROCEEDINGS OF THE INTERNATIONAL CONFERENCE ON CONSUMER ELECTRONICS. (ICCE). ROSEMONT, JUNE 5 - 7, 1991; [PROCEEDINGS OF THE INTERNATIONAL CONFERENCE ON CONSUMER ELECTRONICS. (ICCE)], NEW YORK, IEEE, US, vol. CONF. 10, 5 June 1991 (1991-06-05), pages 336-337, XP010284340, ISBN: 978-0-7803-0001-9**

EP 1 341 260 B1

**Beschreibung**

Satellitenfünksignale in Satellitenrundfunksystemen - wie z.B. beim als SDARS bekannten Satellitenrundfünksystem - werden in der Regel zirkular polarisiert abgestrahlt. Für Empfangsgebiete mit im Wesentlichen reflexionsfreier Ausbreitung wird für den Empfang dieser Signale ein Richtdiagramm mit azimutalem Runddiagramm und einem Gewinn von ca. 3dBi für Elevationswinkel größer 20 bzw. 30 Grad gefordert. Antennen dieser Art sind - zusammen mit den Anforderungen an das Richtdiagramm - z.B. beschrieben in Patsiokas et al.: XM Satellite.; SAE 2001-01-1328; ISSN 0148-7191,3/2001. Die relativ hohe Gewinnforderung im Bereich niedriger Elevationswinkel ist durch den aufgrund der Satellitenpositionen häufig auftretenden niedrigen Einfallswinkel der Satellitenfunkwellen bedingt.

Zur Unterstützung der Versorgung durch Satellitenfunksignale in Satellitenrundfunksystemen ist in besonderen Fällen, wie z.B. beim System SDARS, eine Zusatzversorgung durch terrestrische Funkstationen auf einer von der Satelliterifünkfrequenz geringfügig abweichenden Sendefrequenz vorgesehen. Die terrestrisch ausgestrahlten Wellen sind vertikal polarisiert. Für den Empfang dieser Signale ist demnach azimutal ein Runddigramm der Empfangsantenne mit erhöhtem Gewinn bei niedrigen Einfallswinkeln unter Verzicht auf hohe Gewinnwerte bei Steilstrahlung - d.h. etwa das Richtdiagramm einer vertikalen linearen Antenne-anzustreben. Eine Kombinationsantenne dieser Art ist ebenso in der o.g. Literaturstelle angegeben. Die Zusatzversorgung durch die Aussendung des gleichen Informationsgehalts von terrestrischen Funkstationen, der den Empfänger geringfügig zeitversetzt erreicht, ist insbesondere für bewohnte Gebiete vorgesehen. Im Falle eines Abrisses der Satellitenfunkverbindung, bewirkt durch Abschattung infolge von Gebäuden, Bäumen etc., werden die gesamten Empfangsinformationen in der digitalen Ebene des Empfängers koordiniert und zum Rundfunksignal zusammengeführt. Zur weiteren Unterstützung der Übertragungssicherheit für das Rundfunksignal ist bei den SDARS-Systemen jeweils der Empfang eines zweiten, zeitversetzten Satellitensignals gleichen Informationsgehalts im Interesse der Sicherstellung eines optimalen Empfangergebnisses vorgesehen.

Insbesondere in urbanen Gebieten überlagern sich häufig einer direkt vom Satelliten einfallenden Welle an Gegenständen gestreute Wellen, so dass sich eine Rice-Verteilung und häufig sogar - bei Abriss der direkten Sichtverbindung zu einem Satelliten - eine Rayieigh-Verteilung der Antennen-Empfangssignale einstellt. Messungen haben gezeigt, dass der dadurch entstehende lokale Signalschwund (Fadings) auch bei Frequenzen um 2,3 GHz aufgrund der Tiefe der Signaleinbrüche und aufgrund der niedrigen Signalpegel der Satellitenfünksignale im Empfänger zu einem erheblichen Informationsverlust führen kann. Obgleich diesen Effekten z.B. bei SDARS-Systemen mit Hilfe der Mehrfachversorgung mit zwei Satellitensignalen und in urbanen Gebieten mit terrestrischer Zusatzversorgung entgegengewirkt wird, kommt es nicht selten zum Abriss der Funkverbindung, deren Wiederaufbau infolge der notwendigen Koordinierung und Synchronisation der einzeln empfangenen Informationsanteile im Empfänger eine störende Zeitdauer in Anspruch nimmt.

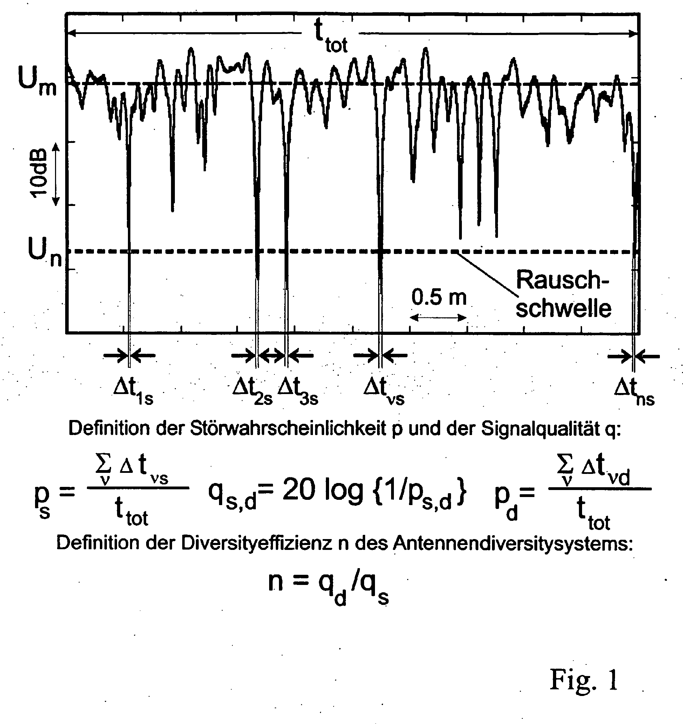

Messungen von Empfangspegeln haben im urbanen Gebiet Pegelschwankungen ergeben, welche beispielhaft in Fig. 1 dargestellt sind. Die dargestellte Rayleighverteilung besitzt einen Pegelmittelwert $U_m$. Wird die mit $U_n$ bezeichnete Rauschschwelle vom aktuellen Pegel unterschritten, so tritt Störung auf. Die Störwahrscheinlichkeit $p_s$ beschreibt die Summe der relativen Zeitintervalle in der eine Störung während einer Fahrt auftritt.

Der Nachteil einer Empfangsanlage mit einer Antenne für Zirkularpolarisation und ggfs. einer Antenne für Vertikalpolarisation mit getrennten Ausgängen besteht darin, dass sowohl im Satellitenempfangssignal als auch im terrestrischen Empfangssignal in gestörten Gebieten Pegeleinbrüche der in Fig. 1 gezeigten Art und Grössenordnung auftreten können.

WO 01/80366 A1 offenbart eine Empfangsantennenanordnung gemäß dem Oberbegriff des Anspruchs 1.

WO 90/07802 A offenbart eine Empfangsantennenanordnung zum Empfangen von Satellitensignalen. Die Richtdiagramme der Empfangsantennenanordnung ist durch Einstellen entsprechender Gewichtungsfaktoren für die einzelnen Antennensignale an einem "Combiner" selbstadaptiv einstellbar.

US 5,784,032 A offenbart eine Empfangsantennenanordnung zum Empfangen von Mobilfunksignalen.

Die Veröffentlichung Lindenmeier H K et al: "An integrated circuit processor for a multiple scanning antenna diversity system for mobile FM reception", Proceedings of the International Conference on Consumer Electronics, Rosemont, Bd. Conf. 10, 5. Juni 1991, Seiten 336-337, XP010284340, ISBN: 978-0-7803-0001-9 zeigt ein Antennen-Diversity-System für FM-Rundfunkempfang.

Aufgabe der vorliegenden Erfindung ist es deshalb, bei einer Empfangsanordnung gemäss dem Oberbegriff des Hauptanspruchs diesen Nachteil zu vermeiden und sowohl in Gebieten mit ungestörtem Welleneinfall als auch in Gebieten mit Mehrwegeausbreitung die Störwahrscheinlichkeit erheblich zu reduzieren und somit die Signalqualität erheblich zu verbessern.

Diese Aufgabe wird erfindungsgemäß durch den kennzeichnenden Teil der Hauptansprüche gelöst.

Die Erfindung wird an Hand der nachfolgenden Figuren beschrieben.

Es zeigt:

Fig. 1: Definition der Störwahrscheinlichkeit p, der Signalqualität q und der Diversityeffizienz n an Hand des zeitabhängigen Pegelverlaufs

Fig. 2: Signalverläufe von drei verschiedenen Antennensignalen und deren Hüllkurve in Abhängigkeit vom durchfahrenen Weg s.

Fig. 4a: Erfindungsgemäße Antennenanordnung.

Fig. 4b: Ähnlich Fig. 4a, ergänzt um Empfänger für terrestrischen und Satellitenempfang.

Fig. 5a: Vertikaldiagramm eines Rahmens mit Dipolcharakter über leitender Ebene

Fig. 5b: Vertikaldiagramm eines Rahmens mit Unterbrechungsstellen und kapazitiven Elementen über leitender Ebene

Fig. 6a: Horizontaldiagramm eines elektrischen Dipols über leitendem Grund.

Fig. 6b: Vertikaldiagramm des rechts oben dargestellten Dipols und dessen links oben dargestellten dreidimensionalen Richtdiagramms.

Fig. 7a bis c: Vertikale Richtdiagramme verschieden ausgeführter Antennen von Typ "inverted-V"

Fig. 8a, b: Horizontal- und Vertikaldiagramm einer rechts oben dargestellten U-adcockantenne über leitender Ebene und deren links oben dargestellten dreidimenionalen Richtdiagramm.

Fig. 9: Erfindungsgemäße Antennenanordnung mit Dipolcharakter mit terrestrischem Anschlußtor und Satelliten-Anschlußtor und einer Umschaltvorrichtung

Fig. 10: Erfindungsgemäße Antennenanordnung mit Dipolcharakter mit terrestrischem Anschlusstor und Satelliten-Anschlusstor und einer Umschaltvorrichtung sowie im Vergleich zu Fig. 9 weiteren Anschlusstoren.

Fig. 11: Relative Amplitude und Phasengang von erfindungsgemäßen Antennen mit Dipolcharakter über dem Azimutwinkel Φ.

Fig. 12: Erfindungsgemäße Antennenanordnung mit Dipolcharakter mit Dipolen vom Typ "inverted-V" und einer hochfrequenten Trennung zur Auskopplung des terrestrischen Empfangssignals

Fig. 13: Signal-Rauschabstand SND im Diversitymode in Abhängigkeit des Signa1-Rauschabstand einer Einzelantenne $SND_s$ für verschiedene Werte der Diversityeffizienz n.

Fig. 14: Fehlerwahrscheinlichkeit im Diversitymode in Abhängigkeit des Signal-Rauschabstand einer Einzelantenne $SND_s$ für verschiedene Werte der Diversityeffizienz n und mathematische Ableitung.

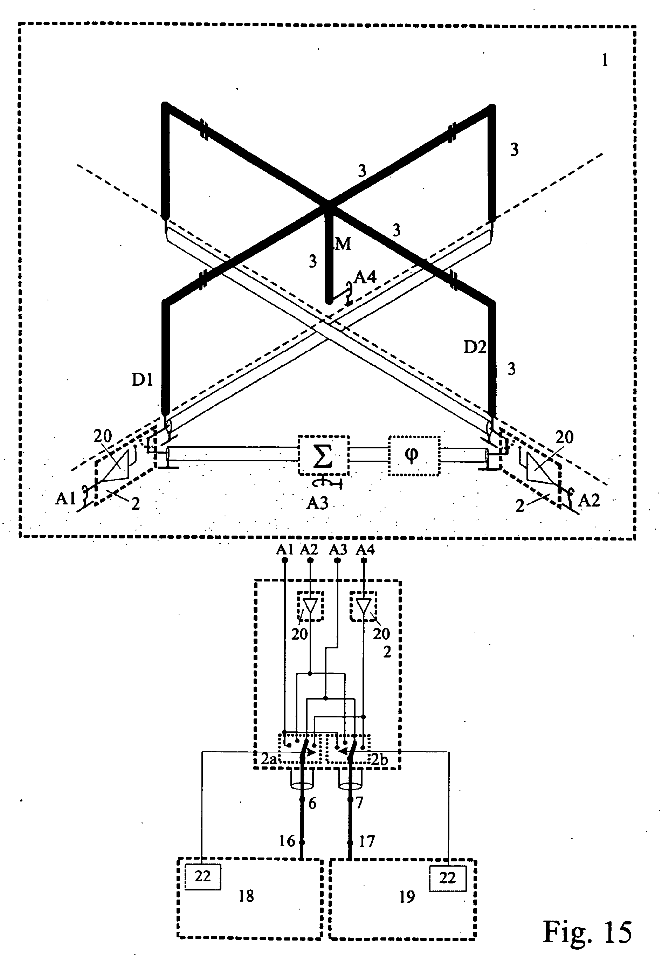

Fig. 15: Erfindungsgemäße Antennenanordnung mit voneinander unabhängigen Diversitysystemen für den Satellitenempfang und den terrestrischen Empfang mit jeweiligem Zugriff auf alle verfügbaren Antennensignale

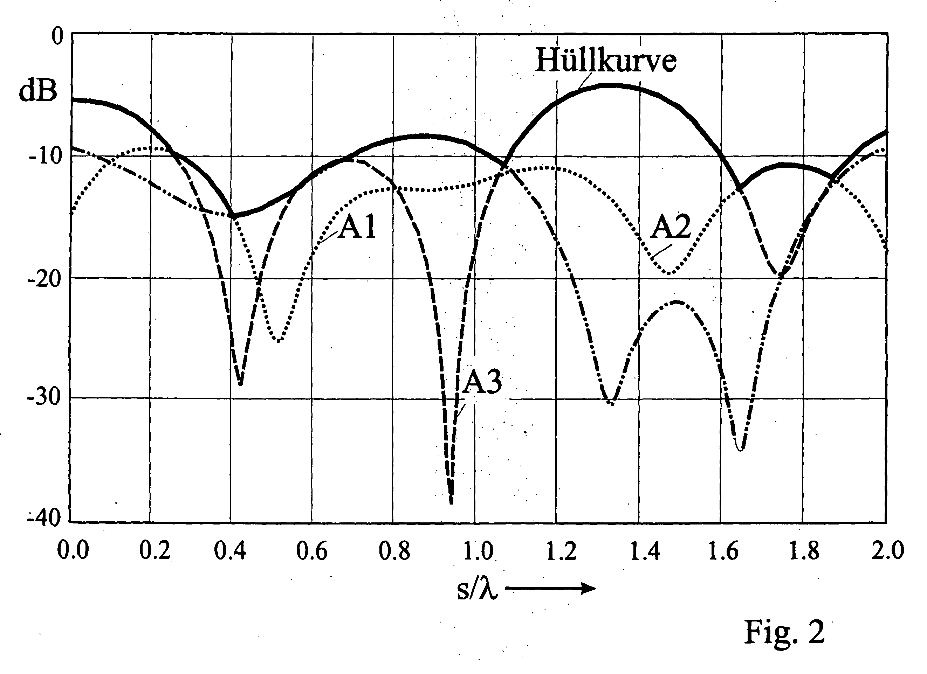

Erfindungsgemäß ist es möglich, bei solchen Antennen der vorgegebenen Art, welche aus Antennen mit Dipolcharakter kombiniert sind und welche zur Erzeugung eines Richtdiagramms für Zirkularpolarisation für Satellitenempfang mit Phasenelementen zusammengeschaltet sind bzw. zum Empfang terrestrischer Signale vertikale Monopole besitzen, eine Diversityfünktion herzuleiten. In Fig. 2 sind typische Pegelverläufe A1 bis A3 von drei getrennt aus einer derartigen Antenne herausgeführten Empfangssignalen unterschiedlicher Antennen mit Dipolcharakter dargestellt. Die stark ausgezogene Hüllkurve kennzeichnet das jeweils stärkste Signal, welches mit Hilfe eines Diversityprozessors und einer Umschaltvorrichtung 2 ausgewählt und zum Empfänger durchgeschaltet werden kann. Die Erfindung besteht somit darin, die einzelnen Antennen in der aus Antennen mit Dipolcharakter kombinierten Antenne als getrennte voneinander hinreichend dekorrelierte Antennen nutzbar zu machen.

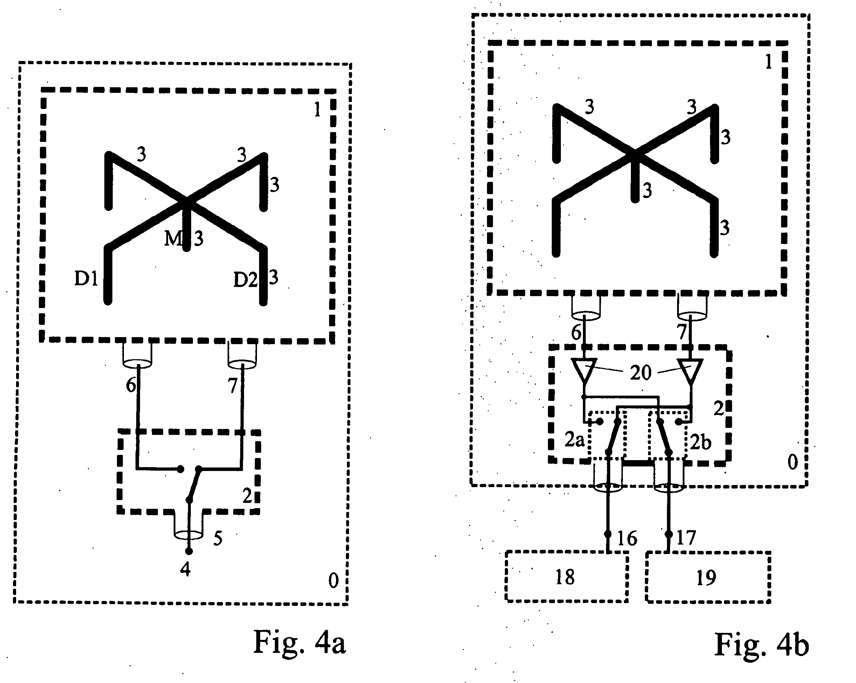

In Fig. 4a ist eine Empfangsantennenanordnung 0 in der einfachsten Form der Erfindung dargestellt. Hierin ist 1 eine Empfangsantenne, wie sie für den Empfang von zirkular polarisierten Satellitensignalen am Satelliten-Anschlusstor 6 und von vertikal polarisierten terrestrischen Signalen am terrestrischen Anschlusstor 7 gestaltet ist. Erfindungsgemäß ist es nun möglich, in Gebieten mit Mehrwegeausbreitung, bedingt durch die an den beiden Toren dekorreliert auftretenden Pegeleinbrüche das bessere terrestrische Signal am Satelliten-Anschlusstor 6 und umgekehrt das günstigere Satellitenempfangssignal am terrestrischen Anschlusstor 7 zu entnehmen. Dies geschieht erfindungsgemäß mit Hilfe einer Umschaltvorrichtung 2, welche das günstigere Empfangssignal 4 der Antennenanschlussstelle für Diversity-Empfang 5 zuleitet. Wie bei geschalteten Diversityantennen üblich, wird die Umschaltvorrichtung 2 entsprechend aus dem Empfänger angesteuert. Für einen Satellitenfunk mit kombinierter terrestrischer Unterstützung kommt deshalb ein Empfänger zur Anwendung, welcher einen Satellitenempfänger 18 und einen terrestrischeri Empfänger 19 mit jeweils getrenntem Eingang besitzt, wobei jeder Eingang mit einer entsprechenden Antenne für Satellitenempfang und für terrestrischen Empfang verbunden ist.

In einer vorteilhaften Ausgestaltung der Erfindung wird deshalb wie in Fig. 4b eine Umschaltvorrichtung 2 verwendet. In der Umschaltvorrichtung 2 ist eine erste Umschaltvorrichtung 2a und eine zweite Umschaltvorrichtung 2b zur diversitätsmässigen Auswahl des günstigeren Empfangssignals 4 vorhanden. Der Ausgang jeder dieser Umschaltvorrichtungen 2a, 2b ist jeweils dem entsprechenden Eingang, d.h. dem terrestrischen Empfänger 19 bzw. dem Satellitenempfänger 18 zugeführt. Damit stehen für beide Empfängereingänge sowohl die Signale am Satelliten-Anschlusstor 6 als auch am terrestrischen Anschlusstor 7 der Empfangsantenne 1 alternativ zur Auswahl durch den Diversityprozessor 22 zur Verfügung.

Im Folgenden werden Grundformen von Antennen mit Dipolcharakter beschrieben, welche kombiniert mit einer um 90 Grad räumlich gedrehten ähnlichen Antenne und durch Überlagerung deren Empfangssignale mit einem Phasenunterschied von 90 Grad ein Richtdiagramm für Zirkularpolarisation ergeben. Hierbei wird für das zirkular polarisiert empfangene Signal azimutal stets ein Runddiagramm gefordert. Für unterschiedliche Satellitenbahnen werden jedoch häufig unterschiedliche Vertikaldiagramme gefordert. Alle im Folgenden beschriebenen Antennenformen sind für eine Anwendung in der vorliegenden Erfindung geeignet.

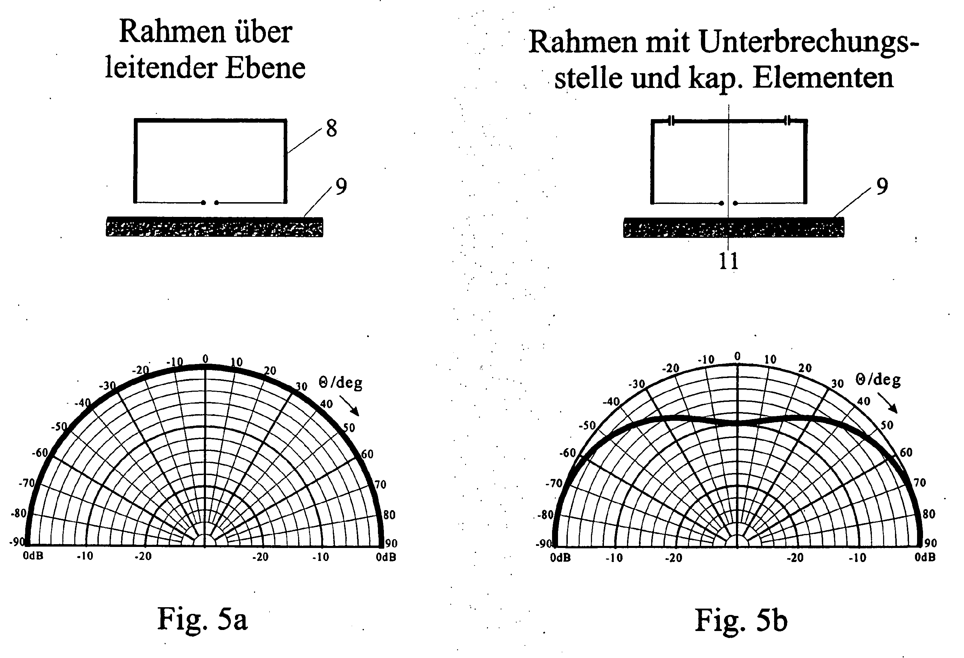

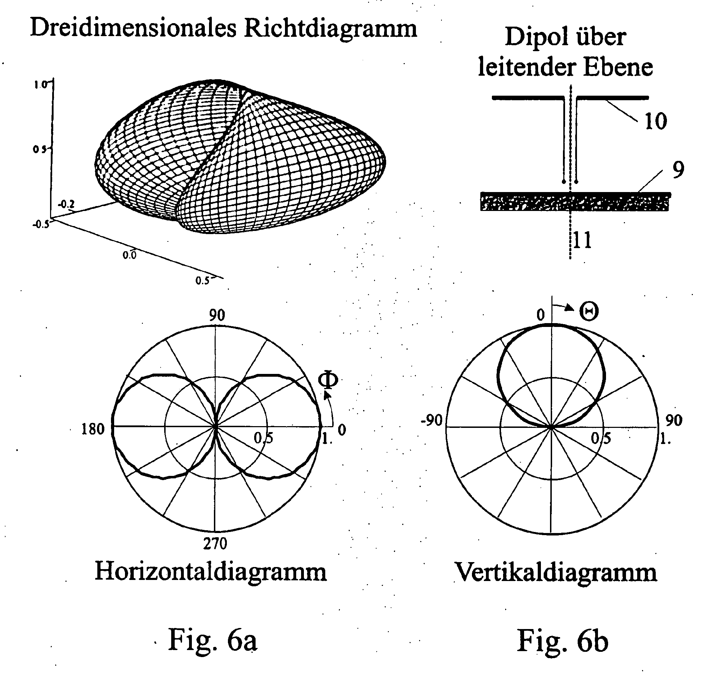

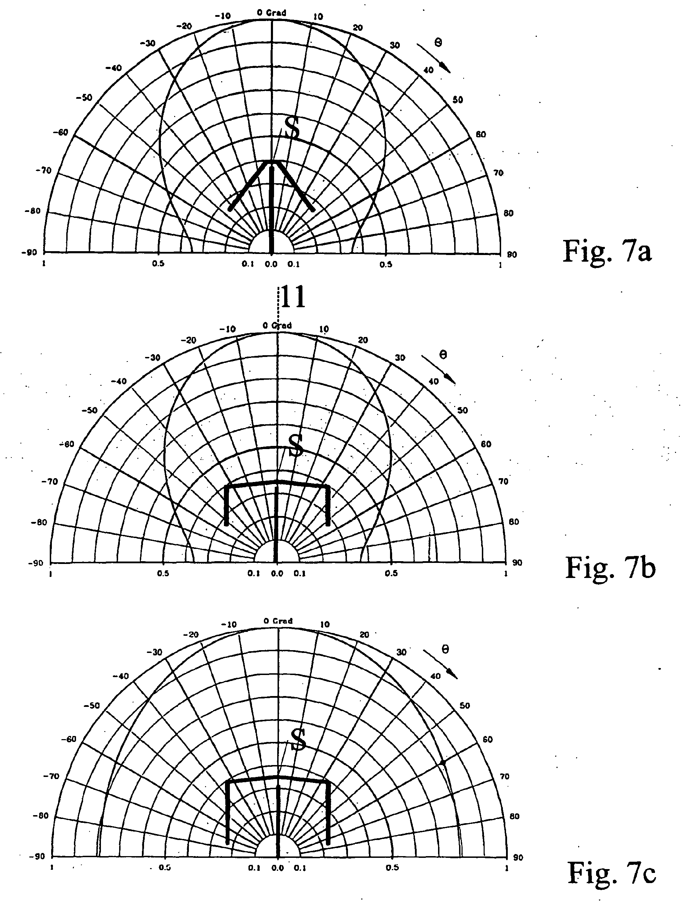

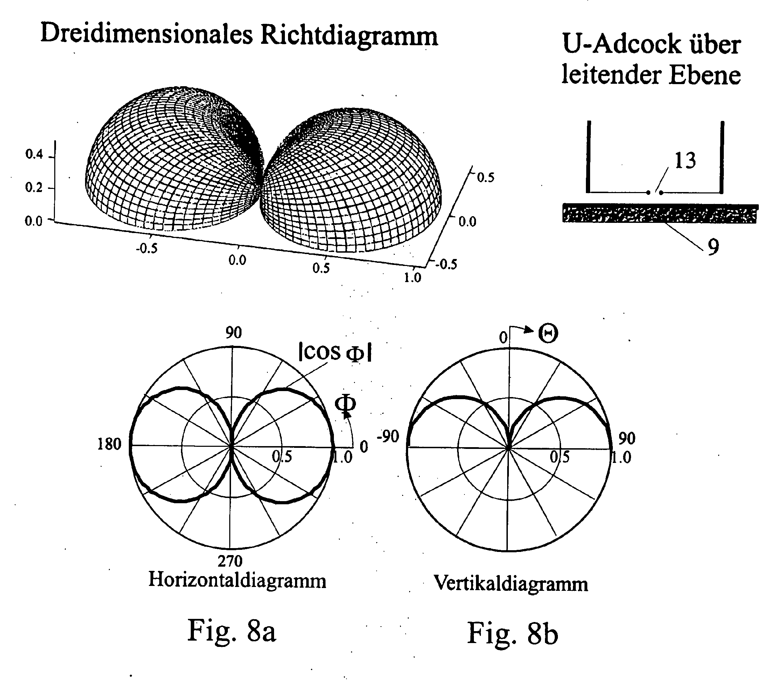

Z.B. zeigt Fig. 5a einen über leitender Ebene befindlichen Rahmendipol mit winkelunabhängigem Elevationsdiagramm. Ein ähnlicher Rahmen ist in Fig. 5b gezeigt, welcher durch symmetrische Einbringung von geeignet kapazitiv beschalteten Trennstellen das darunter ersichtliche Vertikaldiagramm besitzt. Die Abschwächung dieses Diagramms im Bereich des Zenitwinkels bewirkt nach Zusammenschalten mit einem gleichen, räumlich um 90 Grad gedrehten und in der Phase um 90 Grad versetzten Rahmendipol ein gewünschtes, in weiten Bereichen vom Azimutwinkel unabhängiges Vertikaldiagramm. Auf ähnliche Weise wird erfindungsgemäß ein Horizontaldipol über leitender Ebene wie in Fig. 6 eingesetzt, mit einem Horizontaldiagramm wie in Fig. 6a und einem Vertikaldiagramm wie in Fig. 6b. Modifikationen eines solchen Dipols sind in Fig. 7a bis 7c dargestellt, welche eine wesentliche vertikale Komponente zur geeigneten Gestaltung des Vertikaldiagramms besitzen. Hierbei gilt es insbesondere, die überhöhte Strahlung im Zenitbereich des als Inverted-V bekannten Dipols in Fig. 7a zu reduzieren. Schliesslich kann zur Gestaltung eines zirkular polarisierten Diagramms auch das in Fig. 8 dargestellte Monopolpaar über leitender Ebene, welches in der Literatur unter dem Namen U-Adcock bekannt ist, dienen. Neben dem räumlichen Diagramm sind in Fig. 8a das Horizontaldiagramm und in Fig. 8b das Vertikaldiagramm dieser Anordnung dargestellt.

Sämtliche in den Figuren 5 bis 8 dargestellten Grundformen von Antennendipolen D1, D2 besitzen im Wesentlichen von der Elevation unabhängig ein azimutales Richtdiagramm, welches bezogen auf eine Raumrichtung des Dipols ein cosinusförmiges Richtdiagramm beschreibt, wie es in den Figuren 6a und 8a dargestellt ist. Durch Versetzen der Raumrichtungen der Antennendipole D1 und D2 und durch Überlagerung der Empfangsspannungen mit einem Phasenunterschied von 90 Grad ergeben sich somit die gewünschten zirkular polarisierten Richtdiagramme mit azimutaler Rundstrahlung mit allen betrachteten Dipolantennen dieser Art. Der Unterschied der zirkular polarisierten Richtdiagramme beschränkt sich somit auf das Vertikaldiagramm.

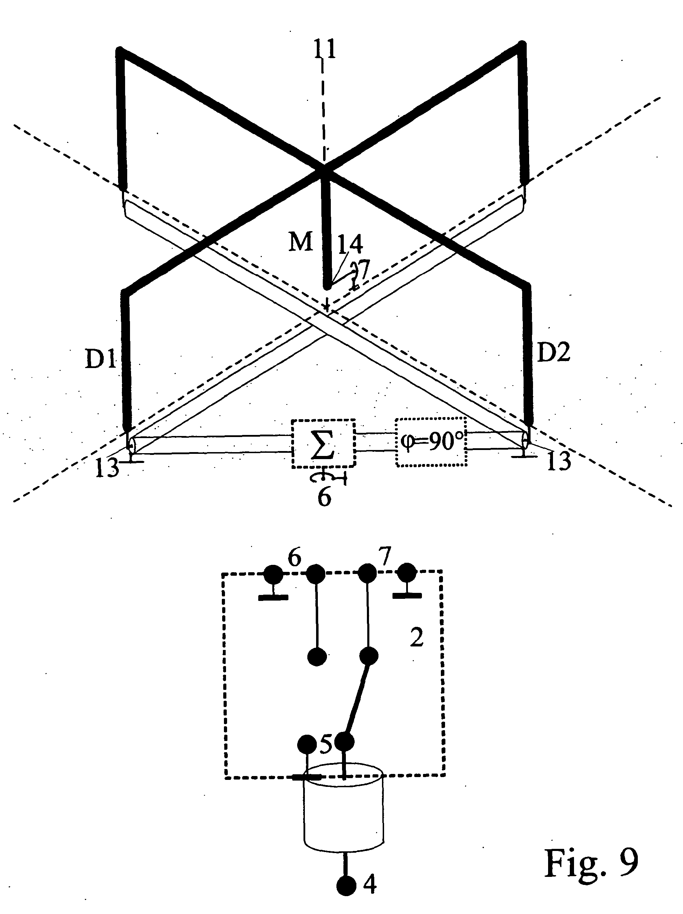

Fig. 9 zeigt eine Empfangsantennenanordnung 0 nach der Erfindung, deren Empfangsantenne 1 unter Verwendung einer Rahmendipolantenne wie in Fig. 5a gestaltet ist. Zur Gestaltung eines Satelliten-Anschlusstors 6 wird die Rahmenantenne mit Hilfe von Lambda/2 langen Leitungen symmetriert und die so gewonnenen Rahmenspannungen gegeneinander in der Phase um 90 Grad gedreht und summiert, so dass das zirkular polarisierte Richtdiagramm am Satelliten-Anschlusstor 6 gebildet ist. Aufgrund der Symmetrie kann entlang der vertikalen Mittellinie 11 eine vertikal polarisierte Antenne mit Dipolcharakter M eingebracht werden, welche an ihrem unteren Ende ein terrestrisches Anschlusstor 7 enthält. Erfindungsgemäß werden, ähnlich wie in Fig. 4a bereits beschrieben, das Satelliten-Anschlusstor 6 und das terrestrische Anschlusstor 7 mit den Eingängen der Umschaltvorrichtung 2 verbunden, so dass an deren Ausgang an der Antennenanschlussstelle für Diversity-Empfang 5 beide Signale alternativ für die Diversityfunktion gebildet werden.

In einer vorteilhaften Weiterführung der Erfindung wird eine Umschaltvorrichtung 2 wie in Fig. 4 eingesetzt, um sowohl für den Satellitenempfänger 18 und den terrestrischen Empfänger 19 eine Diversityfunktion mit dieser Antennenform herbeizuführen. Hierbei werden zur Bildung von zusätzlichen diversitätsmässigen Empfangssignalen weitere Umschaltvorrichtungen 2 verwendet, welche derart gestaltet und in die Empfangsantennenanordnung 0 eingebracht sind, dass die Überlagerung der Dipolempfangssignale 13 mit 90 Grad Phasenunterschied durch Umschaltung unterbrochen ist und an einem gesonderten Dipolausgang A1 bzw. A2 durch anwählbare Umschaltung alternativ verfügbar sind. Dadurch wird die Anzahl der voneinander unabhängigen verfügbaren Signale wesentlich erhöht.

Mit der Erfindung ist das Ziel verbunden, die Diversityeffizienz möglichst groß zu gestalten, so dass die oben diskutierte Fehlerwahrscheinlichkeit $P_d$ nennenswert reduziert wird. Letztere ist in Fig. 1 definiert, woraus sich im Vergleich zur Fehlerwahrscheinlichkeit mit einer Einzelantenne die Diversityeffizienz n des Antennendiversitysystems ergibt. Die Störwahrscheinlichkeit wird durch Einsatz einer Diversityfünktion zu $P_d$ reduziert, wie dies nach Fig. 1 ebenso definiert ist. Somit ist die Diversityeffizienz n gegeben als das Verhältnis der Signalqualität $q_d$ im Diversitymodus zu $q_s$ im Einzelantennenmodus bei einer Fahrt in demselben Rayleigh-Empfangsfeld. Die Signalqualität ist ebenso in Fig. 1 definiert.

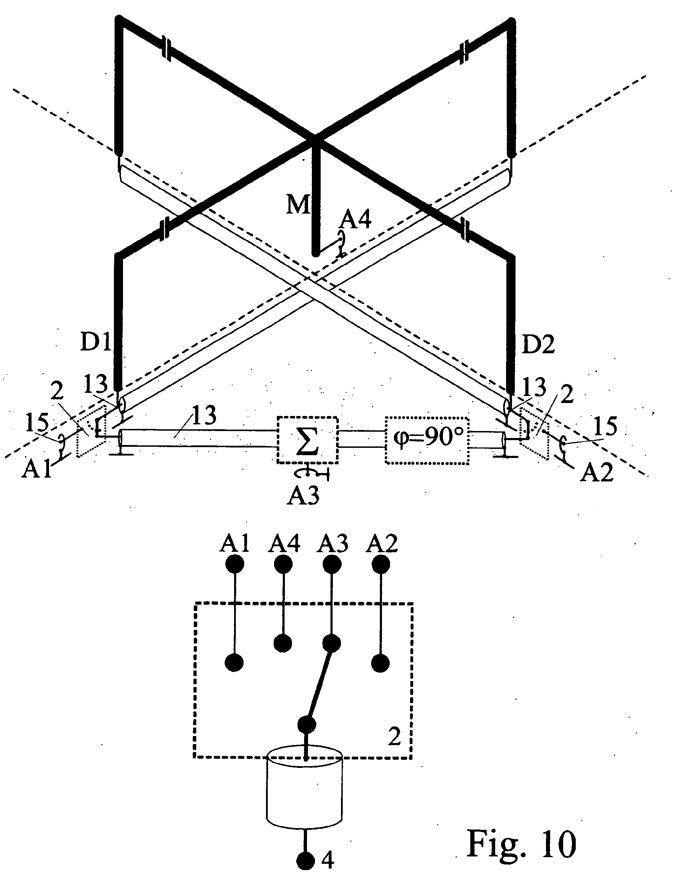

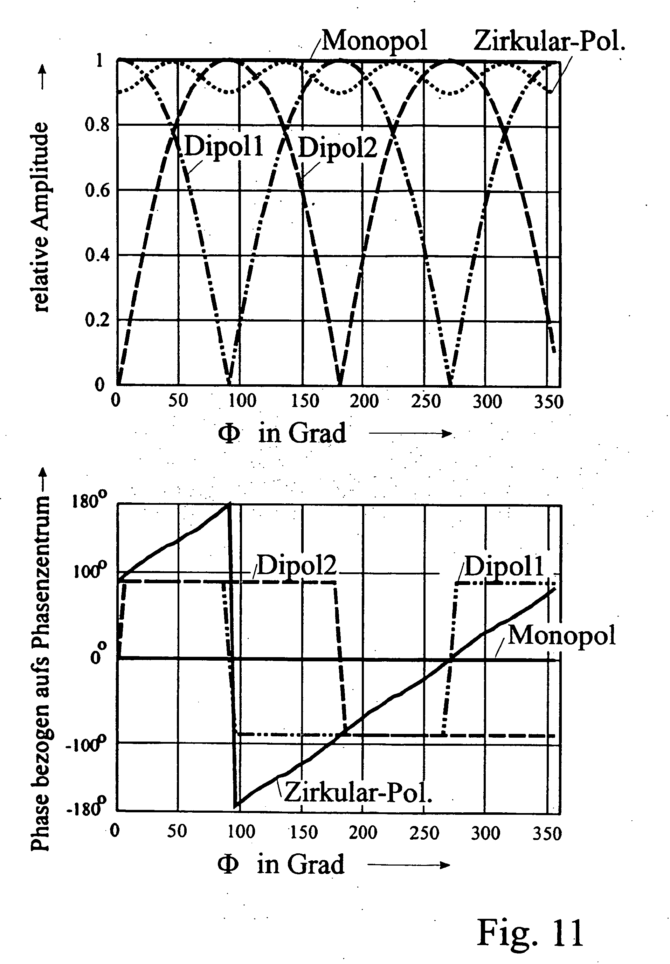

Eine nennenswerte Diversityeffizienz setzt die Unabhängigkeit der einzelnen Empfangssignale voneinander voraus. Für die dargestellten erfindungsgemäßen Empfangsantennenanordnungen 0 ergeben sich im Rayleigh-Empfangsfeld vergleichsweise hohe Werte für n aufgrund der Unterschiedlichkeit der auf eine Raumrichtung bezogenen azimutalen Richtdiagramme bzw. der unterschiedlichen azimutalen Phasenverläufe der einzelnen Antennen mit Dipolcharakter. Grundformen dieser Diagramme einer Antenne in Fig. 10 sind für die Dipole 1 (Anschluss A1) und Dipol 2 (Anschluss A2), dem Anschluss für Zirkularpolarisation (Anschluss A3) und dem Monopol (Anschluss A4) in Fig. 11 oben für die relative azimutale Amplitudenabhängigkeit und in Fig. 11 unten für die azimutale Phasenabhängigkeit dargestellt.

Im Sinne einer Erweiterung der Diversifünktion einer derartigen Empfangsantennenanordnung 0 werden deshalb in Fig. 10 erfindungsgemäß die Empfangsspannungen beider Dipole D1 und D2 der Antenne in Fig. 9 getrennt für die Diversityfunktion zusätzlich zur Verfügung gestellt. Hierzu sind weitere Umschaltvorrichtungen 2 eingebracht zur Bildung von zusätzlichen diversitätsmäßig unabhängigen Empfangssignalen, welche derart gestaltet und in die Empfangsantennenanordnung 0 eingebracht sind, dass die Überlagerung der Dipolempfangssignale 13 mit 90 Grad Phasenunterschied durch Umschaltung unterbrochen ist und die Dipolempfangssignale 13 an den gesonderten Dipolausgängen A1 und A2 durch anwählbare Umschaltung alternativ verfügbar sind. Dadurch wird die erreichbare Diversityeffizienz n erheblich gesteigert.

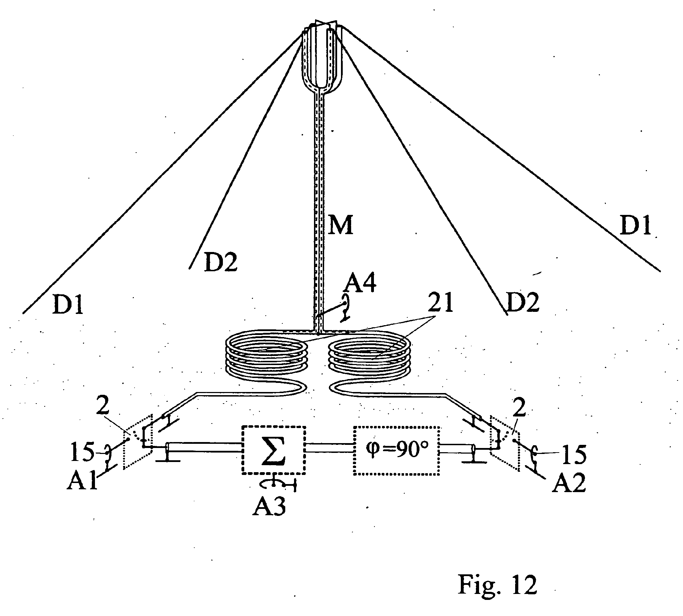

In einer ebenso leistungsfähigen Empfangsantennenanordnung 0 nach der Erfindung wird eine Antenne mit im Wesentlichen horizontalen Dipolen über einer horizontal orientierten leitenden Grundfläche 9 eingesetzt, wobei zur Gestaltung einer vertikal polarisierten Antenne mit Dipolcharakter M der Träger der symmetrisch gespeisten Dipole D1 und D2 durch hochfrequente Trennung 21 im Fußpunkt dieses Trägers das mit A4 bezeichnete terrestrische Anschlusstor 7 gebildet ist (Fig. 12).

Obgleich sich an beiden Ausgängen A3 und A4 azimutaler Rundempfang der Signalamplituden einstellt, sind die azimutalen Phasengänge der Signale an beiden Ausgängen grundsätzlich unterschiedlich. In Fig. 11 sind die azimutalen Phasengänge mit der linear mit dem Azimutwinkel sich ändernden Phase am Ausgang der Summationsschaltung A3 und dem azimutal unabhängigen Phasengang am Ausgang A4 angegeben. Bei Selektion des stets grösseren der beiden Signale mit einem Schaltdiversity in einem im Rayleigh-Empfangsfeld bewegten Fahrzeug ergibt sich eine Diversitätswirkung von n = 1.9 Antennen. Hierbei gilt angenähert der Zusammenhang $p_d = p_s^2$, wobei $p_d$ die durch Signalfading bedingte Störauftrittswahrscheinlichkeit im 2-Antennen-Diversity-Modus und $p_e$ die Störauftrittswahrscheinlichkeit im Einzel-Antennen-Modus desselben Rayleighfelds beschreibt. Damit ist die Reduktion der Fehlerwahrscheinlichkeit gegeben durch:

$$F_{red} = p_d/p_e = p_e^{(n-1)}$$

Ferner sind zwei weitere Diversity-Antennenausgänge A1 und A2 gestaltet. Zusammen mit dem Ausgang A3 für zirkular polarisierte Signale und dem Ausgang A4 für azimutalen Rundempfang stehen demnach bis zu 3 diversitätsmäßige Signale zur Verfügung. Die nachfolgend dargestellte Tabelle zeigt die Zahl n der äquivalenten statistisch voneinander unabhängigen Signale gemäss der o.g. Definition bei Verwendung der an den betreffenden Ausgängen auftretenden Signale in einer Schaltdiversityanordnung.

In Folge der Unterschiedlichkeit dieser Diagramme in Fig. 11 ergeben sich z.B. für die Anschlüsse A1 bis A4 für eine Antennenanordnung in Fig. 10 die folgenden Werte für die Diversityeffizienz sowohl für die terrestrischen Signale als auch für nicht zu hohe Elevation der einfallenden Satellitensignale.

| Verwendete Ausgänge | n |
|---|---|
| A1, A2 | 1,95 |
| A1    A3 | 1,5 |
| A1        A4 | 1,94 |
| A2, A3, | 1,5 |
| A2,    A4 | 1,9 |
| A3, A4 | 1,9 |
| A1, A2, A3, A4 | 3,1 |

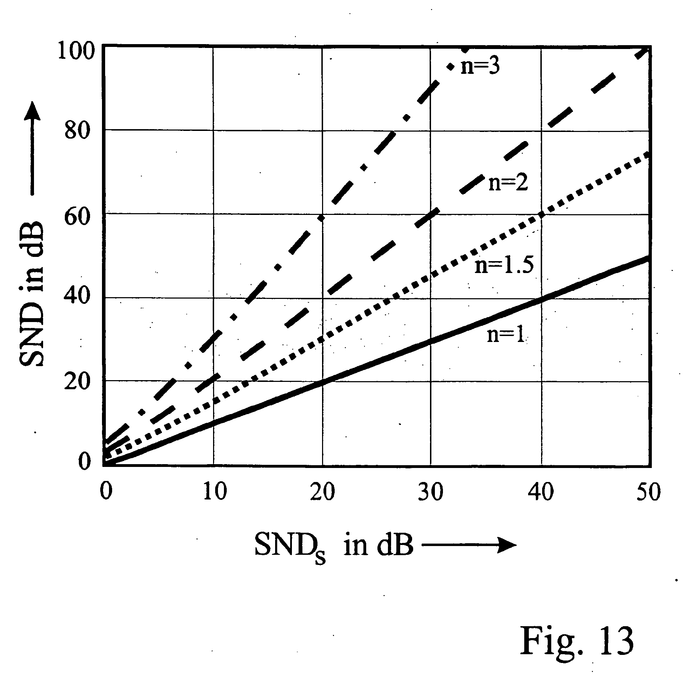

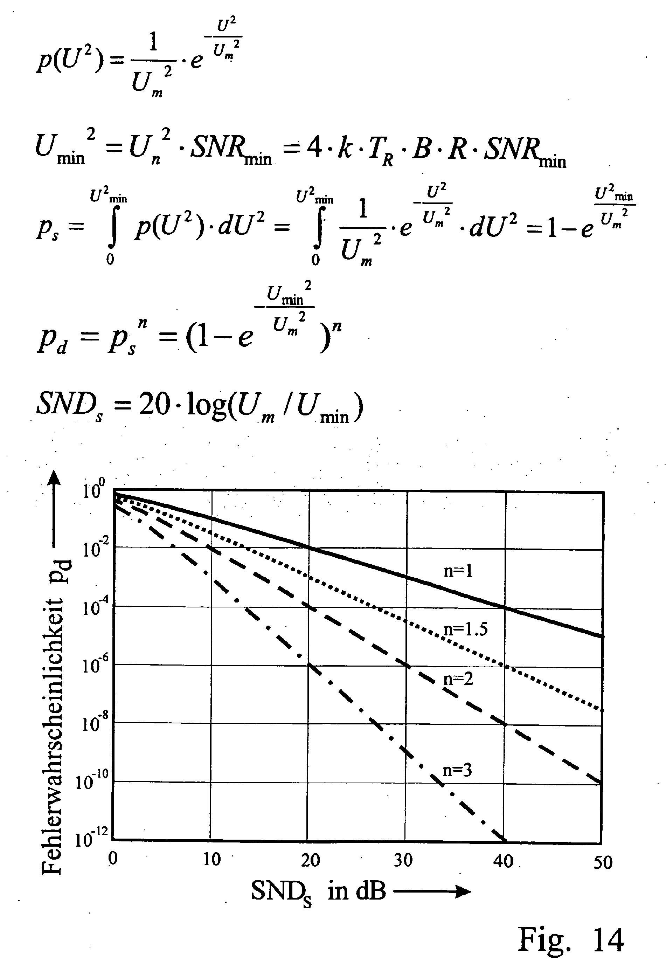

Zur Darstellung des mit der Erfindung erreichten Fortschritts ist in Fig. 13 die Fehlerwahrscheinlichkeit $P_d$ im Diversitymodus in Abhängigkeit von $SND_s$ dargestellt. Hierin wird mit $SND_s$ der Signal-Rauschabstand als der Abstand in dB zwischen dem Effektivwert eines im Rayleighfeld mit einer Einzelantenne empfangenen Pegels $U_m$ und der Rauschschwelle $U_{min}$ bezeichnet. Diese Gesetzmässigkeit lässt sich aus den in Fig. 14 angegebenen Beziehungen herleiten, wobei $U_n$ die Rauschspannung und $SNR_{min}$ einen minimal geforderten Signalrauschabstand darstellen. Diese Reduktion der Störwahrscheinlichkeit lässt sich als eine fiktive Anhebung des mit SND bezeichneten Signal-Rauschabstands auffassen, der einer Einzelantenne bei gleicher Störwahrscheinlichkeit auf derselben Wegstrecke angeboten werden müsste. Bei einer vorgegebenen Rauschspannung $U_n$ bedeutet dies eine fiktive Anhebung des Effektivwerts $U_m$ um den in Fig. 13 angegebenen Betrag. Diese Anhebung ist wiederum eine Funktion von $SND_s$ und ist in Fig. 13 für verschiedene Werte von n dargestellt. Schon der Verlauf von der Funktion für n = 2 - also z.B. bei ausschließlicher Verwendung der Anschlüsse A3 und A4 - zeigt eine nennenswerte Verbesserung der Empfangssituation im Diversitymodus.

In Bild 15 ist angedeutet, auf welche Weise durch Verstärker 20 sichergestellt werden kann, dass die an den einzelnen Toren auftretenden Impedanz- und Belastungszustände die Empfangssignale nicht beeinträchtigen sowie die Leistungsteilung unbeschadet zu ermöglichen. Ferner ist es erfindungsgemäß sinnvoll, für die Umschaltvorgänge selbst benötigten Sperr- und Durchlasselemente steuerbare Dioden vorzusehen.

**Liste der Bezeichnungen**

Empfangsantennenanordnung 0
Empfangsantenne 1
Umschaltvorrichtung 2
Antennen mit Dipolcharakter 3, D1, D2
günstigeres Empfangssignal 4
Antennenanschlussstelle für Diversity-Empfang 5
Satelliten-Anschlusstor 6
terrestrisches Anschlusstor 7
vertikal polarisierte Antenne mit Dipolcharakter (M)
Rahmenantennen 8
horizontal orientierten leitenden Grundfläche 9
elektrische Dipole 10
vertikalen Mittellinie 11
vertikale Monopolantenne M
Symmetriepunkt S
inverted V- Dipols 12
Dipol-Empfangssignale 13
Monopol-Empfangssignale 14
weitere Antennenanschlussstelle 15
Satellitenempfänger 18
terrestrischen Empfängers 19
Verstärker 20
hochfrequente Trennung 21
Diversityprozessor 22

**Patentansprüche**

1. System mit einer Empfangsantennenanordnung (0) für Fahrzeuge für den GHz-Frequenzbereich und für den Empfang von mit zirkularer Polarisation ausgestrahlten Satellitensignalen und von dazu koordiniert und mit vertikaler Polarisation terrestrisch ausgestrahlten Signalen nach dem Standard des digitalen Satellitenrundfunksystems SDARS oder nach einem ähnlichen Standard, umfassend eine Mehrzahl von kombinierten Antennen mit Dipolcharakter, bestehend aus zwei senkrecht zueinander orientierten Antennen mit Dipolcharakter (D1, D2), deren azimutale Richtdiagramme im Wesentlichen cosinusförmig sind und deren Dipol-Empfangssignale (13) mit 90 Grad Phasenunterschied überlagert einem dem Empfang von zirkular polarisierten Satellitensignalen zugeordneten Satelliten-Anschlusstor (6) zugeführt sind und einer vertikal polarisierten Antenne mit Dipolcharakter (M), deren Dipol-Empfangssignale. (14) einem dem Empfang von terrestrisch ausgestrahlten, vertikal polarisierten Wellen zugeordneten terrestrischen Anschlusstor (7) zugeführt sind, **dadurch gekennzeichnet, dass**
die Ausdehnung der Antennenkombination in keiner Richtung größer ist als 3/4 der Wellenlänge,
dass in der Empfangsantennenanordnung (0) zur Bildung einer Antennen-Diversityfunktion mindestens eine Umschaltvorrichtung (2) vorhanden ist, wobei zum Zweck der Auswahl eines günstigeren Empfangssignals (4) und zur Reduzierung der Störwahrscheinlichkeit mindestens die zwei diversitätsmäßig unterschiedlichen an dem Satelliten-Anschlusstor (6) und dem terrestrischen Anschlusstor (7) auftretenden Dipol-Empfangssignale (13) durch Umschaltung der Umschaltvorrichtung (2) mindestens einer Antennenanschlussstelle für Diversityempfang (5) alternativ zugeleitet sind, und
dass das System einen Satellitenempfänger (18) und einen terrestrischen Empfänger (19) umfasst, die mit der mindestens einen Umschaltvorrichtung (2) verbunden sind, wobei durch Umschaltung der mindestens einen Umschaltvorrichtung (2) einem Eingang des Satellitenempfängers (18) und einem Eingang des terrestrischen Empfängers (19) jeweils das an dem Satelliten-Anschlusstor (6) vorhandene Empfangssignal und das an dem terrestrischen Anschlusstor (7) vorhandene Empfangssignal alternativ zuleitbar sind.

2. Empfangsantennenanordnung (0) nach Anspruch 1, **dadurch gekennzeichnet, dass**
die beiden hinsichtlich ihrer azimutalen Richtdiagramme senkrecht zueinander orientierten Antennen mit Dipolcharakter (D1, D2) im Wesentlichen als gleichartige Rahmenantennen (8) über einer leitenden, im Wesentlichen horizontal orientierten Grundfläche (9) gebildet sind und ihre Rahmenflächen jeweils senkrecht zu dieser im Wesentlichen horizontal orientierten leitenden Grundfläche (9) orientiert sind und beide Rahmenantennen symmetrisch zu einer vertikalen Mittellinie (11) gestaltet sind und die vertikal polarisierte Antenne mit Dipolcharakter als eine Antenne mit dem Charakter eines vertikalen Monopols über der horizontal orientierten leitenden Grundfläche (9) gebildet ist.

3. Empfangsantennenanordnung (0) nach Anspruch 2, **dadurch gekennzeichnet, dass**
beide im Wesentlichen als Rahmenantennen gestaltete Antennen mit Dipolcharakter (D 1, D2) über einer leitenden, im Wesentlichen horizontal orientierten Grundfläche (9) gebildet sind und ihre Rahmenflächen jeweils senkrecht zu dieser Grundfläche (9) orientiert und beide Rahmenantennen symmetrisch zu einer vertikalen Mittellinie (11) gestaltet sind und symmetrisch zur vertikalen Mittellinie (11) Trennstellen im Rahmenzug aufweisen, welche mit geeigneten kapazitiven Blindelementen. belastet sind derart, dass beide Rahmenantennen das gewünschte Vertikaldiagramm besitzen und die vertikal polarisierte Antenne mit Dipolcharakter als eine Antenne mit dem Charakter eines vertikalen Monopols (M) über der im Wesentlichen horizontal orientierten leitenden Grundfläche (9) gebildet ist.

4. Empfangsantennenanordnung (0) nach Anspruch 1, **dadurch gekennzeichnet, dass** die beiden hinsichtlich ihrer azimutalen im Wesentlichen cosinusförmigen Richtdiagramme senkrecht zueinander orientierten Antennen mit Dipolcharakter (D 1, D2) durch im Wesentlichen horizontal gekreuzte elektrische Dipole (10) über einer leitenden, im Wesentlichen horizontal orientierten Grundfläche (9) angeordnet sind und beide elektrische Dipole (10) symmetrisch zu einer vertikalen Mittellinie (11) gestaltet sind und die vertikal polarisierte Antenne mit Dipolcharakter als eine Antenne mit dem Charakter einer vertikalen Monopolantenne (M) über der im Wesentlichen horizontal orientierten leitenden Grundfläche (9) gebildet ist.

5. Empfangsantennenanordnung (0) nach Anspruch 4, **dadurch gekennzeichnet, dass** jeder der beiden gekreuzten elektrischen Dipole (10) sowohl eine nennenswert horizontale als auch eine von seinem Symmetriepunkt (S) ausgehend fallende, nennenswerte vertikale Ausdehnung - wie z.B. in Form des bekannten inverted V-Dipols (12) - besitzt.

6. Empfangsantennenanordnung, (0) nach Anspruch 1, **dadurch gekennzeichnet, dass** die beiden hinsichtlich ihrer azimutalen, im Wesentlichen cosinusförmigen Richtdiagramme senkrecht zueinander orientierten Antennen mit Dipolcharakter (D1, D2) durch zwei Paare jeweils an den Enden einer der Diagonalen eines auf einer im Wesentlichen horizontal orientierten Grundfläche (9) vorgegebenen Quadrats angeordneter senkrecht orientierter elektrischer Monopolantennen (M) gestaltet sind, wobei die Empfangsspannungen der Monopolantennen (M) jedes Paares durch Differenzbildung die Dipol-Empfangssignale (13) der beiden Antennen mit Dipolcharakter (D 1, D2) bilden und die vertikal polarisierte Antenne mit Dipolcharakter als eine Antenne mit dem Charakter eines vertikalen Monopols (M) über der horizontal orientierten leitenden Grundfläche (9) gebildet ist.

7. Empfangsantennenanordnung (0) nach Anspruch 6, **dadurch gekennzeichnet, dass** die vertikal polarisierte Antenne mit Dipolcharakter (M) zur Wahrung der Symmetrie der Anordnung aus der Summe der Monopol-Empfangssignale (14) aller vier Monopolantennen gebildet ist.

8. Empfangsantennenanordnung (0) nach Anspruch 1 bis 7, **dadurch gekennzeichnet, dass** die Empfangsantennenanordnung für den koordinierten Empfang von zirkular polarisierten Satellitensignalen und von vertikal polarisierten terrestrisch ausgestrahlten Signalen an einen Satellitenempfänger (18) und an einen terrestrischen Empfänger (19) angeschlossen ist und dass die Antennenanschlussstelle für Diversity-Empfang (5) mit dem Eingang des Satellitenempfängers (18) verbunden ist und in diesem Empfänger ein Diversityprozessor (21) zur Ansteuerung der Umschaltvorrichtungen (2) vorhanden ist mit dem Ziel, das jeweils aktuell günstigere Empfangssignal (4) für den Satellitenempfänger (18) auszuwählen und das terrestrische Anschlusstor (7) zusätzlich mit dem Eingang des terrestrischen Empfängers (19) verbunden ist.

9. Empfangsantennenanordnung (0) nach Anspruch 1 bis 7, **dadurch gekennzeichnet, dass** die Empfangsantennenanordnung (0) für den koordinierten Empfang von zirkular polarisierten Satellitensignalen und von vertikal polarisierten terrestrisch ausgestrahlten Signalen an einen Satellitenempfänger (18) und an einen terrestrischen Empfänger (19) angeschlossen ist und dass die Antennenanschlussstelle für Diversity-Empfang (5) mit dem Eingang des terrestrischen Empfängers (19) verbunden ist und in diesem Empfänger ein Diversityprozessor (21) zur Ansteuerung der Umschaltvorrichtungen (2) vorhanden ist mit dem Ziel, das jeweils aktuell günstigere Empfangssignal (4) für den terrestrischen Empfänger (19) auszuwählen und das Satelliten-Anschlusstor (6) zusätzlich mit dem Eingang des Satellitenempfängers (18) verbunden ist.

10. Empfangsantennenanordnung (0) nach Anspruch 1 bis 8, **dadurch gekennzeichnet, dass** eine erste Umschaltvorrichtung (2a) zur diversitätsmäßigen Auswahl des günstigeren Empfangssignals (4) für einen Satellitenempfänger und eine zweite Umschaltvorrichtung (2b) zur diversitätsmäßigen Auswahl des günstigeren Empfangssignals (4) für einen terrestrischen Empfänger vorhanden und diese derart gestaltet sind, dass jeder eingangsseitig sowohl das Empfangssignal am Satelliten-Anschlusstor (6) als auch das Empfangssignal am terrestrischen Anschlusstor (7) zugeführt ist und an deren Ausgang jeweils eine Antennenanschlussstelle für Diversity-Empfang (5) vorhanden ist, von denen die eine mit dem Eingang des Satellitenempfängers (18) und die andere mit dem Eingang des terrestrischen Empfängers (19) verbunden ist und beide Empfänger je einen Diversityprozessor (21) zur Ansteuerung der beiden Umschaltvorrichtungen (2a, b) enthalten, mit dem Ziel, das jeweils aktuell günstigere Empfangssignal (4) für den entsprechenden Empfänger auszuwählen.

11. Empfangsantennenanordnung (0) nach den Ansprüchen 1 bis 10,
**dadurch gekennzeichnet, dass**
zur Bildung von zusätzlichen diversitätsmäßig unabhängigen Empfangssignalen mindestens eine weitere Umschaltvorrichtung (2) vorhanden ist, welche derart gestaltet und in die Empfangsantennenanordnung (0) eingebracht ist, dass die Überlagerung der Dipol-Empfangssignale (13) mit 90 Grad Phasenunterschied durch Umschaltung unterbrochen ist und mindestens eines der Dipol-Empfangssignale (13) an einem gesonderten Dipolausgang (A1 bzw. A2) durch anwählbare Umschaltung alternativ gegeben ist.

12. Empfangsantennenanordnung (0) nach Anspruch 1 bis 11,
**dadurch gekennzeichnet,**
**dass** in den Umschaltvorrichtungen (2) Verstärkeranordnungen (20) mit kleinem Eigenrauschen (LNA) vorhanden sind, durch welche auf an sich bekannte Weise sichergestellt ist, dass die an den einzelnen Toren auftretenden Impedanz- und Belastungszustände die Empfangssignale nicht beeinträchtigen sowie die Leistungsteilung unbeschadet ermöglicht ist und die für die Umschaltvorgänge selbst benötigten Sperr- und Durchlasselemente durch steuerbare Dioden realisiert sind.

13. Verfahren zum koordinierten Empfangen von mit zirkularer Polarisation ausgestrahlten Satellitensignalen und von dazu koordiniert und mit vertikaler Polarisation terrestrisch ausgestrahlten Signalen nach dem Standard des digitalen Satellitenrundfunkssystems SDARS oder nach einem ähnlichen Standard, welches umfasst das Erzeugen von Dipol-Empfangssignalen (13) mittels einer Mehrzahl von kombinierten Antennen mit Dipolcharakter, bestehend aus zwei senkrecht zueinander orientierten Antennen mit Dipolcharakter (D1, D2), deren azimutale Richtdiagramme im Wesentlichen cosinusförmig sind und deren Dipol-Empfangssignale (13) mit 90 Grad Phasenunterschied überlagert einem dem Empfang von zirkular polarisierten Satellitensignalen zugeordneten Satelliten-Anschlusstor (6) zugeführt werden und einer vertikal polarisierten Antenne mit Dipolcharakter (M), deren Dipol-Empfangssignale (14) einem dem Empfang von terrestrisch ausgestrahlten, vertikal polarisierten Wellen zugeordneten terrestrischen Anschlusstor (7) zugeführt werden,
**dadurch gekennzeichnet,**
eine Antennenkombination eingesetzt wird, deren Ausdehnung in keiner Richtung größer ist als 3/4 der Wellenlänge, dass in der Empfangsantennenanordnung zur Bildung einer Antennen-Diversityfunktion mindestens eine Umschaltvorrichtung (2) vorgesehen wird, wobei zum Zweck der Auswahl eines günstigeren Empfangssignals (4) und zur Reduzierung der Störwahrscheinlichkeit mindestens die zwei diversitätsmäßig unterschiedlichen an dem Satelliten-Anschlusstor (6) und dem terrestrischen Anschlusstor (7) auftretenden Dipol-Empfangssignale (13) durch Umschaltung der Umschaltvorrichtung (2) mindestens einer Antennenanschlussstelle für Diversityempfang (5) alternativ zugeleitet werden, und dass durch Umschaltung der mindestens einen Umschaltvorrichtung (2) einem Eingang eines Satellitenempfängers (18) und einem Eingang eines terrestrischen Empfängers (19) jeweils das an dem Satelliten-Anschlusstor (6) vorhandene Empfangssignal und das an dem terrestrischen Anschlusstor (7) vorhandene Empfangssignal alternativ zugeleitet werden.

## Claims

1. System with a reception antenna arrangement (0) for vehicles for the GHz frequency range and for reception of satellite signals transmitted with circular polarization and of terrestrially transmitted signals coordinated thereto and with vertical polarization according to the standard of the satellite digital audio radio system SDARS or a like standard, including a plurality of combined antennas with dipole character, comprising two antennas with dipole character (D1, D2) oriented perpendicular to each other, the azimuthal directional diagrams of which are substantially cosine-shaped and whose dipole reception signals (13) are fed, superimposed with a 90-degree phase difference, to a satellite connection gate (6) allocated to reception of circularly polarized satellite signals, and a vertically polarized antenna with dipole character (M), whose dipole reception signals (14) are fed to a terrestrial connection gate (7) allocated to reception of terrestrially transmitted vertically polarized waves,
**characterized in that**
the dimension of said antenna combination is not greater than 3/4 of the wavelength in any direction, at least one switching device (2) is provided in the reception antenna arrangement (0) for generating an antenna diversity function, wherein for the purpose of selecting a more favorable reception signal (4) and for reducing the interference likelihood at least the two diversity-different dipole reception signals (13), appearing at the satellite connection gate (6) and the terrestrial connection gate (7), are fed alternatively to at least one antenna connection point for diversity reception (5) by switching said switching device (2), and
the system includes a satellite receiver (18) and a terrestrial receiver (19) connected to said at least one switching device (2), wherein, by switching said at least one switching device (2), the reception signal at the satellite connection gate (6) and the reception signal at the terrestrial connection gate (7) can alternatively be fed to an input of the satellite receiver (18) and an input of the terrestrial receiver (19), respectively.

2. Reception antenna arrangement (0) according to claim 1,
**characterized in that**
the two antennas with dipole character (D1, D2), oriented perpendicular to each other with respect to their azimuthal directional diagrams, are provided as frame type antennas (8) substantially of the same type disposed on a conductive, substantially horizontally oriented base surface (9) and their frame areas each are oriented perpendicular to said substantially horizontally oriented conductive base surface (9) and both frame antennas are provided symmetrically to a vertical center line (11) and the vertically polarized antenna with dipole character is provided as an antenna with the character of a vertical monopole disposed above the horizontally oriented conductive base surface (9).

3. Reception antenna arrangement (0) according to claim 2,
**characterized in that**
both antennas with dipole character (D1, D2), formed substantially as frame antennas, are disposed above a conductive, substantially horizontally oriented base surface (9) and their frame surfaces are each oriented perpendicular in relation to said base surface (9) and both frame antennas are provided symmetrical in relation to a vertical center line (11) and include gaps formed in the frame symmetrically in relation to the vertical center line (11), loaded with appropriate capacitive reactive elements such that both frame antennas include the desired vertical diagram and the vertically polarized dipole-type antenna is provided as an antenna having the character of a vertical monopole (M) disposed over the substantially horizontally oriented conductive base surface (9).

4. Reception antenna arrangement (0) according to claim 1,
**characterized in that**
both antennas with dipole character (D1, D2), oriented perpendicularly to each other in relation to their azimuthal substantially cosine-shaped directional diagrams, are disposed above a conductive substantially horizontally oriented base surface (9) by substantially horizontally crossed electrical dipoles (10) and both electrical dipoles (10) are disposed symmetrically in relation to a vertical center line (11) and said vertically polarized antenna with dipole character is provided as an antenna with the character of a vertical monopole antenna (M) disposed above the substantially horizontally oriented conductive ground surface (9).

5. Reception antenna arrangement (0) according to claim 4,
**characterized in that**
each of said two crossed electrical dipoles (10) having both a significant horizontally expanse and a significant vertically falling expanse starting from its symmetry point (S) - for example in the form of the well known inverted V-dipole (12).

6. Reception antenna arrangement (0) according to claim 1,
**characterized in that**
the two antennas with dipole character (D1, D2), oriented perpendicularly to each other in relation to their azimuthal substantially cosine-shaped directional diagrams, are provided by two pairs of vertically oriented electrical monopole antennas (M) arranged at the ends of one of the diagonal lines of a square disposed on a substantially horizontally oriented base surface (9), wherein the reception voltages of said monopole antennas (M) of each pair form the dipole reception signals (13) of said two antennas with dipole character (D1, D2) by forming a difference, and the vertically polarized antenna with dipole character is provided as an antenna with the character of a vertical monopole (M) above the horizontally oriented conductive ground surface (9).

7. Reception antenna arrangement (0) according to claim 6,
**characterized in that**
said vertically polarized antenna with dipole character (M) is formed of the sum of the monopole reception signals (14) of all four monopole antennas to preserve the symmetry of the arrangement.

8. Reception antenna arrangement (0) according to claim 1 to 7,
**characterized in that**
the reception antenna arrangement is connected to a satellite receiver (18) and a terrestrial receiver (19) for the coordinated reception of circularly polarized satellite signals and of vertically polarized terrestrially transmitted signals, and
the antenna connection point for diversity reception (5) is connected to the input of the satellite receiver (18) and a diversity processor (21) is provided in said receiver for controlling said switching devices (2) so as to select the reception signal (4) that is currently more favorable for the satellite receiver (18), and said terrestrial connection gate (7) is additionally connected to the input of said terrestrial receiver (19).

**9.** Reception antenna arrangement (0) according to claim 1 to 7,
**characterized in that**
the reception antenna arrangement (0) is connected to a satellite receiver (18) and a terrestrial receiver (19) for the coordinated reception of circularly polarized satellite signals and of vertically polarized terrestrially transmitted signals, and
the antenna connection point for diversity reception (5) is connected to the input of the terrestrial receiver (19) and a diversity processor (21) is provided in said receiver for controlling said switching devices (2) so as to select the reception signal (4) that is currently more favorable for the terrestrial receiver (19), and said satellite connection gate (6) is additionally connected to the input of said satellite receiver (18).

**10.** Reception antenna arrangement (0) according to claim 1 to 8,
**characterized in that**
a first switching device (2a) is provided for selecting the more favorable reception signal (4) in terms of diversity for a satellite receiver, and a second switching device (2b) is provided for selecting the more favorable reception signal (4) in terms of diversity for a terrestrial receiver and these being configured such that each is supplied on the input side with both the reception signal at the satellite connection gate (6) and the reception signal at the terrestrial connection gate (7), and an antenna connection point for diversity reception (5) is provided at each output, of which one is connected to the input of the satellite receiver (18) and the other is connected to the input of terrestrial receiver (19), and each of the two receivers contains a diversity processor (21) for controlling said two switching devices (2a, b), so as to select the currently more favorable reception signal (4) for the respective receiver.

**11.** Reception antenna arrangement (0) according to claims 1 to 10,
**characterized in that**
at least one additional switching device (2) is provided to form additional independent reception signals in terms of diversity, being configured and included in the reception antenna arrangement (0) such that the superposition of the dipole reception signals (13) with a 90-degree phase difference is interrupted by a switching, and at least one of the dipole reception signals (13) is alternatively available, by selectable switching, on a separate dipole output (A1 and A2, respectively).

**12.** Reception antenna arrangement (0) according to claim 1 to 11,
**characterized in that**
amplifier arrangements (20) with low inherent noise (LNA) are present in the switching devices (2) to ensure in a known way that the impedance and load conditions occurring at said individual gates do not impair the reception signals and that the division of power is made possible without interference, and the blocking and passage-permitting elements required for the switching processes themselves are realized with controllable diodes.

**13.** Method for coordinated reception of satellite signals transmitted with circular polarization and of terrestrially transmitted signals coordinated thereto and with vertical polarization according to the standard of the satellite digital audio radio system SDARS or a like standard, including generating dipole reception signals (13) by means of a plurality of combined antennas with dipole character, comprising two antennas with dipole character (D1, D2) oriented perpendicular to each other, the azimuthal directional diagrams of which are substantially cosine-shaped and whose dipole reception signals (13) are fed, superimposed with a 90-degree phase difference, to a satellite connection gate (6) allocated to reception of circularly polarized satellite signals, and a vertically polarized antenna with dipole character (M), whose dipole reception signals (14) are fed to a terrestrial connection gate (7) allocated to reception of terrestrially transmitted vertically polarized waves,
**characterized in that**
an antenna combination is employed whose dimension is not greater than 3/4 of the wavelength in any direction,
at least one switching device (2) is provided in the reception antenna arrangement for generating an antenna diversity function, wherein for the purpose of selecting a more favorable reception signal (4) and for reducing the interference likelihood at least the two diversity-different dipole reception signals (13), appearing at the satellite connection gate (6) and the terrestrial connection gate (7), are fed alternatively to at least one antenna connection point for diversity reception (5) by switching said switching device (2), and
by switching said at least one switching device (2), the reception signal at the satellite connection gate (6) and the reception signal at the terrestrial connection gate (7) are alternatively fed to an input of a satellite receiver (18) and an input of a terrestrial receiver (19), respectively.

**Revendications**

**1.** Système avec un dispositif d'antennes de réception des fréquences en GHz et pour la réception de signaux (0) pour des véhicules dans le domaine satellites émis avec une polarisation circulaire et coordonné à cet effet et la réception de signaux terrestres émis avec une polarisation verticale conformément à la norme SDARS de système de radiodiffusion numérique par satellite ou conformément à une norme semblable, comprenant une multitude d'antennes combinées de type dipôle, se composant de deux antennes de type dipôle (D1, D2) orientées perpendiculairement l'une par rapport à l'autre, dont les diagrammes de directivité azimutale sont de forme sensiblement cosinusoïdale et dont les signaux de réception dipôles (13) superposés avec une différence de phase de 90 degrés sont transmis à un point de connexion satellitaire (6) destiné à la réception de signaux satellites à polarisation circulaire, et une antenne à polarisation verticale de type dipôle (M), dont les signaux de réception dipôles (14) sont transmis à un point de connexion terrestre (7) destiné à la réception d'ondes polarisées verticales émises d'une source terrestre,
**caractérisé en ce que**
l'extension de la combinaison d'antennes ne dépasse en aucune direction les % de la longueur d'onde, **en ce que** dans le dispositif d'antennes de réception (0) se trouve au moins un dispositif commutateur (2) pour constituer une fonction Diversity des antennes, où afin de sélectionner le signal de réception le plus approprié (4) et de réduire les probabilités de brouillage les au moins deux signaux de réception dipôles (13) différents selon le principe de diversité et reçus au point de connexion satellitaire (6) et au point de connexion terrestre (7) sont alternativement retransmis par l'action du dispositif commutateur (2) au moins à un point de connexion d'antenne de réception par diversité (5), et
**en ce que** le système comporte un élément de réception satellitaire (18) et un élément de réception terrestre (19), qui sont reliés à au moins un dispositif commutateur (2), où par l'action du au moins un dispositif commutateur (2) le signal de réception disponible au point de connexion satellitaire (6) et le signal de réception disponible au point de connexion terrestre (7) peuvent alternativement être retransmis respectivement à une entrée du dispositif de réception satellitaire (18) et à une entrée du récepteur terrestre (19).

2. Dispositif d'antennes de réception (0) selon la revendication 1,
**caractérisé en ce que**
les deux antennes de type dipôle (D1, D2) orientées perpendiculairement l'une par rapport à l'autre en vertu de leurs diagrammes de directivité azimutale sont sensiblement constituées comme antennes-cadres de type semblable (8) au-dessus d'une aire de base conductrice orientée sensiblement à l'horizontale (9) et leurs surfaces cadres sont respectivement orientées perpendiculairement par rapport à cette aire de base conductrice d'orientation sensiblement horizontale (9) et les deux antennes-cadres sont conçues de façon symétrique par rapport à une ligne médiane verticale (11) et l'antenne à polarisation verticale de type dipôle est constituée comme une antenne de type monopôle verticale au-dessus de l'aire de base conductrice à orientation horizontale (9).

3. Dispositif d'antennes de réception (0) selon la revendication 2,
**caractérisé en ce que**
les deux antennes de type dipôle sensiblement formées comme antennes-cadres (D1, D2) sont construites au-dessus d'une aire de base conductrice d'orientation sensiblement horizontale (9) et leurs surfaces-cadres sont respectivement orientées de façon perpendiculaire par rapport à cette aire de base (9) et les deux antennes-cadres sont formées de façon symétrique par rapport à une ligne médiane verticale (11) et présentent dans la gamme des cadres des points de sectionnement qui sont symétriques par rapport à la ligne médiane verticale (11) qui sont chargés de faux éléments capacitaires appropriés de telle sorte que les deux antennes-cadres possèdent le diagramme vertical souhaité et que l'antenne de type dipôle à polarisation verticale est construite comme une antenne de type monopôle verticale (M) au-dessus de l'aire de base conductrice à orientation sensiblement horizontale (9).

4. Dispositif d'antennes de réception (0) selon la revendication 1,
**caractérisé en ce que**
les deux antennes de type dipôle (D1, D2) orientées perpendiculairement l'une par rapport à l'autre en vertu de leurs diagrammes de directivité azimutale de forme sensiblement cosinusoïdale sont disposées par une dipôle électrique croisée sensiblement horizontale (10) au-dessus d'une aire de base conductrice orientée sensiblement à l'horizontale (9) et les deux dipôles électriques (10) sont constituées de façon symétrique par rapport à une ligne médiane verticale (11) et l'antenne à polarisation verticale de type dipôle est constituée comme une antenne de type monopôle verticale (M) au-dessus de l'aire de base conductrice à orientation sensiblement horizontale (9).

5. Dispositif d'antennes de réception (0) selon la revendication 4,
**caractérisé en ce que**
chacune des deux dipôles électriques croisées (10) possède une extension horizontale remarquable ainsi qu'une importante extension verticale descendante à partir de son point de symétrie (S) - par exemple sous la forme de la dipôle en V inversé connue en soi (12).

6. Dispositif d'antennes de réception (0) selon la revendication 1,

**caractérisé en ce que**
les deux antennes de type dipôle (D1, D2) orientées perpendiculairement l'une par rapport à l'autre en vertu de leurs diagrammes de directivité azimutale de forme sensiblement cosinusoïdale sont constituées de deux paires d'antennes monopôles électriques (M) à orientation perpendiculaire disposées respectivement aux extrémités d'une des diagonales d'un carré donné au-dessus d'une aire de base orientée sensiblement à l'horizontale (9) , où l'envergure de réception des antennes monopôles (M) de chaque paire constitue par différentiation les signaux de réception dipôle (13) des deux antennes de type dipôle (D1, D2) et l'antenne de polarisation verticale de type dipôle est constituée comme une antenne de type monopôle verticale (M) au-dessus de l'aire de base conductrice d'orientation sensiblement horizontale (9).

7. Dispositif d'antennes de réception (0) selon la revendication 6,
   **caractérisé en ce que**
   l'antenne de polarisation verticale de type dipôle (M) est construite pour maintenir la symétrie du dispositif à partir de la somme des signaux de réception monopôle (14) de toutes les quatre antennes monopôles.

8. Dispositif d'antennes de réception (0) selon la revendication 1 à 7,
   **caractérisé en ce que**
   le dispositif d'antennes de réception est relié à un récepteur satellitaire (18) et à un récepteur terrestre (19) pour assurer la réception coordonnée de signaux satellites à polarisation circulaire et de signaux d'émission terrestre à polarisation verticale et **en ce que**
   le point de connexion des antennes pour une réception en diversité (5) est relié à l'entrée du récepteur satellitaire (18) et dans ce récepteur est fourni un processeur Diversity (21) destiné à piloter les dispositifs commutateurs (2) dans le but de sélectionner à tout moment le signal de réception respectif le plus approprié (4) pour le récepteur satellitaire (18) et le point de connexion terrestre (7) est en outre relié à l'entrée du récepteur terrestre (19).

9. Dispositif d'antennes de réception (0) selon la revendication 1 à 7,
   **caractérisé en ce que**
   le dispositif d'antennes de réception (0) est relié à un récepteur satellitaire (18) et à un récepteur terrestre (19) pour assurer la réception coordonnée de signaux satellites à polarisation circulaire et de signaux d'émission terrestre à polarisation verticale et **en ce que**
   le point de connexion des antennes pour une réception en diversité (5) est relié à l'entrée du récepteur terrestre (19) et dans ce récepteur est fourni un processeur Diversity (21) destiné à piloter les dispositifs commutateurs (2) dans le but de sélectionner à tout moment le signal de réception respectif le plus approprié (4) pour le récepteur terrestre (19) et le point de connexion satellitaire (6) est en outre relié à l'entrée du récepteur satellitaire (18).

10. Dispositif d'antennes de réception (0) selon la revendication 1 à 8,
    **caractérisé en ce que**
    sont disponibles un premier dispositif commutateur (2a) de sélection conformément à la fonction Diversity du signal de réception (4) le plus approprié pour un récepteur satellitaire et un second dispositif commutateur (2b) de sélection conformément à la fonction Diversity du signal de réception (4) le plus approprié pour un récepteur terrestre et **en ce que** ceux-ci sont constitués de telle sorte qu'y soient transmis du côté entrée tant le signal de réception du point de connexion satellitaire (6) qu'également le signal de réception du point de connexion terrestre (7) et qu'à chaque sortie soit disponible respectivement un point de connexion d'antenne pour la réception de diversité (5), dont l'un est relié à l'entrée du récepteur satellitaire (18) et l'autre à l'entrée du récepteur terrestre (19) et les deux récepteurs contiennent chacun un processeur Diversity (21) de pilotage des deux dispositifs commutateurs (2a, b), l'objectif étant d'assurer la sélection du signal de réception (4) le plus approprié au moment voulu pour le récepteur correspondant.

11. Dispositif d'antennes de réception (0) selon la revendication 1 à 10,
    **caractérisé en ce que**
    pour la formation de signaux de réception supplémentaires indépendants conformes à la fonction de diversité est fourni au moins un dispositif commutateur supplémentaire (2) , qui est construit et intégré dans le dispositif d'antennes de réception (0) de telle façon à interrompre par commutation la superposition des signaux de réception dipôle (13) avec une différence de phase de 90° et à fournir alternativement au moins un des signaux de réception dipôle (13) à une sortie dipôle séparée (A1 ou A2) par une commutation sélectionnable.

12. Dispositif d'antennes de réception (0) selon la revendication 1à 11,
    **caractérisé en ce que**
    dans les dispositifs commutateurs (2) sont fournis des dispositifs intensificateurs (20) à faibles bruits propres (AFB) qui permettent d'assurer de manière connue en soi que les états d'impédance et de charge aux points de connexion individuels n'impactent pas les signaux de réception et que la division de puissance puisse se faire sans dommage et que les éléments de blocage et de passage nécessaires pour les commutations mêmes soient réalisés par des diodes pilotables.

**13.** Procédé de réception coordonnée de signaux satellites émis avec une polarisation circulaire et coordonné à cet effet et de signaux terrestres émis avec une polarisation verticale conformément à la norme SDARS de système de radiodiffusion numérique par satellite ou conformément à une norme semblable, lequel englobe la production de signaux de réception dipôles (13) au moyen d'une multitude d'antennes combinées de type dipôle, se composant de deux antennes de type dipôle (D1, D2) orientées perpendiculairement l'une par rapport à l'autre, dont les diagrammes de directivité azimutale sont de forme sensiblement cosinusoïdale et dont les signaux de réception dipôles (13) superposés avec une différence de phase de 90 degrés sont transmis à un point de connexion satellitaire (6) destiné à la réception de signaux satellites à polarisation circulaire, et d'une antenne à polarisation verticale de type dipôle (M), dont les signaux de réception dipôles (14) sont transmis à un point de connexion terrestre (7) destiné à la réception d'ondes polarisées verticales émises d'une source terrestre,
**caractérisé en ce que**
une combinaison d'antennes est utilisée dont l'extension ne dépasse en aucune direction les % de la longueur d'onde,
**en ce que** dans le dispositif d'antennes de réception est prévu au moins un dispositif commutateur (2) pour constituer une fonction Diversity des antennes, où afin de sélectionner le signal de réception le plus approprié (4) et de réduire les probabilités de brouillage au moins les deux signaux de réception dipôles (13) différents selon le principe de diversité et reçus au point de connexion satellitaire (6) et au point de connexion terrestre (7) sont alternativement retransmis par commutation du dispositif commutateur (2) au moins à un point de connexion d'antenne de réception par diversité (5), et
**en ce que** par la commutation au moins du dispositif commutateur (2) soient retransmis alternativement à une entrée d'un récepteur satellitaire (18) et à une entrée d'un récepteur terrestre (19) le signal de réception disponible au point de connexion satellitaire (6) et le signal de réception disponible au point de connexion terrestre (7).

Definition der Störwahrscheinlichkeit p und der Signalqualität q:

$$p_s = \frac{\sum\limits_{v} \Delta t_{vs}}{t_{tot}} \qquad q_{s,d} = 20 \log \{1/p_{s,d}\} \qquad p_d = \frac{\sum\limits_{v} \Delta t_{vd}}{t_{tot}}$$

Definition der Diversityeffizienz n des Antennendiversitysystems:

$$n = q_d / q_s$$

Fig. 1

Fig. 2

EP 1 341 260 B1

Fig. 4b

Fig. 4a

# Rahmen über leitender Ebene

# Rahmen mit Unterbrechungs- stelle und kap. Elementen

EP 1 341 260 B1

Fig. 5a

Fig. 5b

## Dreidimensionales Richtdiagramm

## Dipol über leitender Ebene

Horizontaldiagramm

Vertikaldiagramm

Fig. 6a

Fig. 6b

Fig. 7a

Fig. 7b

Fig. 7c

# Dreidimensionales Richtdiagramm

## U-Adcock über leitender Ebene

$|\cos \Phi|$

Horizontaldiagramm

**Fig. 8a**

Vertikaldiagramm

**Fig. 8b**

EP 1 341 260 B1

Fig. 9

Fig. 10

Fig. 11

D1

D2

M

A4

21

D2

D1

2

15

A1

Σ

A3

φ=90°

2

15

A2

Fig. 12

Fig. 13

$$p(U^2) = \frac{1}{U_m^2} \cdot e^{-\frac{U^2}{U_m^2}}$$

$$U_{min}^2 = U_n^2 \cdot SNR_{min} = 4 \cdot k \cdot T_R \cdot B \cdot R \cdot SNR_{min}$$

$$p_s = \int_0^{U_{min}^2} p(U^2) \cdot dU^2 = \int_0^{U_{min}^2} \frac{1}{U_m^2} \cdot e^{-\frac{U^2}{U_m^2}} \cdot dU^2 = 1 - e^{\frac{U_{min}^2}{U_m^2}}$$

$$p_d = p_s^{\,n} = (1 - e^{-\frac{U_{min}^2}{U_m^2}})^n$$

$$SND_s = 20 \cdot \log(U_m / U_{min})$$

Fig. 14

Fig. 15

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 0180366 A1
- WO 9007802 A
- US 5784032 A

### In der Beschreibung aufgeführte Nicht-Patentliteratur

- XM Satellite. **Patsiokas et al.** SAE. 13. Januar 2001
- An integrated circuit processor for a multiple scanning antenna diversity system for mobile FM reception. **Lindenmeier H K et al.** Proceedings of the International Conference on Consumer Electronics. 05. Juni 1991, 336-337